# EUROPÄISCHE PATENTSCHRIFT

(11) **EP 0 921 889 B1**
(45) Veröffentlichungstag und Bekanntmachung des Hinweises auf die Patenterteilung: **02.10.2002**
(21) Anmeldenummer: 97935446.1
(22) Anmeldetag: 22.07.1997
(51) Int. Cl.: B23K 9/133

(54) **VORRICHTUNG ZUM THERMISCHEN BEHANDELN EINES MITTELS HEISSDRAHTVERFAHREN ZU VERARBEITENDEN SCHWEISSDRAHTES**
DEVICE FOR THE HEAT TREATMENT OF A WELDING WIRE TO BE PROCESSED ACCORDING TO A HOT-WIRE PROCESS
DISPOSITIF DE TRAITEMENT THERMIQUE D'UN FIL D'APPORT A TRAVAILLER DANS LE CADRE D'UN PROCESSUS PAR FIL CHAUD

(30) Priorität: 22.07.1996 DE 29612374 U
(43) Veröffentlichungstag der Anmeldung: 16.06.1999
(73) Patentinhaber: Knapp, Friedrich, 40477 Düsseldorf (DE)
(72) Erfinder: Knapp, Friedrich, 40477 Düsseldorf (DE)
(74) Vertreter: Möbus, Steffen
(86) Internationale Anmeldenummer: DE9701534
(87) Internationale Veröffentlichungsnummer: WO98003295

(56) Entgegenhaltungen:
- FR-A- 1 458 850
- PATENT ABSTRACTS OF JAPAN vol. 95, no. 2, 31.März 1995 & JP 06 304642 A (KOJIMA DENKI SEISAKUSHO K.K.), 1.November 1994,

## Beschreibung

Die vorliegende Erfindung betrifft eine Vorrichtung zum thermischen Vorbehandeln eines in einem Heißdrahtverfahren zu verarbeitenden Schweißdrahtes, der sich vor einem Arbeitsgang auf einer Temperatur unterhalb einer Arbeitstemperatur befindet.

Solche Vorrichtungen sind aus dem Stand der Technik bisher nicht bekannt. In bekannten Schweißmaschinen, in denen ein Schweißdraht nach dem Heißdrahtverfahren verarbeitet wird, ist es üblich, den Schweißdraht als Stromleiter zu nutzen und auf diese Weise von innen zu erwärmen. Eine solche Vorgehensweise hat mehrere Nachteile.

Zunächst ist der damit erzielte Wirkungsgrad schlecht, da Wärmeverluste bei der Drahtführung einen erhöhten Energieeinsatz erforderlich machen.

Ferner wird der eigentliche Schweißvorgang negativ beeinflußt, da durch die Stromführung des Schweißdrahtes auch ein zusätzlicher Strom über das Werkstück abfließt. Dies führt auch zu Qualitätseinbußen am fertigen Produkt. Darüber hinaus sind auch etwaige Einflüsse des zusätzlichen Stroms auf das Verhalten des Lichtbogens beim Schweißvorgang nicht auszuschließen.

Die Nachrüstung eines solchen Heizprinzips an bestehende Schweißmaschinen, um diese nach dem Heißdrahtverfahren zu betreiben, ist nur mit sehr großem Aufwand möglich. Die Schweißparameter für eine Anlage müssen völlig neu eingestellt werden.

Die Aufgabe der vorliegenden Erfindung ist daher, eine Vorrichtung zum thermischen Behandeln eines Schweißdrahtes zu schaffen, die problemlos an bereits bestehende Schweißmaschinen adaptiert werden kann, ohne die Qualität des Schweißvorganges und des fertigen Produktes negativ zu beeinflussen.

Die Aufgabe wird durch die Merkmale des Anspruchs 1 gelöst.

Mit der erfindungsgemäßen Vorrichtung wird der Schweißdraht vor seiner Verarbeitung nach dem Heißdrahtverfahren von außen durch Kontakt und/oder Strahlung und Konvektion erwärmt. Eine solche Vorrichtung läßt sich einfach in bestehende Anlagen integrieren, da die Heizleistung auf die bestehenden Betriebsparameter eingestellt werden kann.

Gemäß Anspruch 2 ist es von Vorteil, daß das Durchgangsgehäuse aus einem wärmeleitenden Material besteht. Dies führt zu einer besseren Wärmeübertragung auf den Schweißdraht.

Ein weiterer Vorteil gemäß Anspruch 3 besteht darin, daß die Heizeinrichtung wenigstens einen Widerstandsdraht umfaßt, der außen um das Durchgangsgehäuse herum gewickelt ist. Dies stellt eine sehr einfache aber leicht steuerbare Art der Heizeinrichtung dar.

Eine weitere Optimierung der Wärmeübertragung wird in vorteilhafter Weise gemäß Anspruch 4 erreicht. Durch das Aufbringen einer Wärmeisolierung wird die gesamte entwickelte Wärme der Heizeinrichtung in Richtung Schweißdraht gerichtet und weitestgehend auf diesen übertragen.

Ein weiterer Vorteil gemäß Anspruch 5 beruht darin, daß die Temperatur nicht über einen Temperaturfühler gemessen wird. In den meisten Fällen ist eine Temperaturmessung nur schlecht möglich, da der Temperaturfühler an schwer zugänglichen Stellen angebracht werden muß und darüber hinaus, bedingt durch Totzeiten der Regelstrecke und des Temperaturfühlers, nur ein ungenaue Temperaturregelung zuläßt. Eine hochgenaue Temperaturmessung ist z. B. mit einem Pyrometer möglich. Dadurch werden die Kosten aber in etwa verdoppelt. Die Strom- und Spannungsmessung und Berechnung in Abhängigkeit vom Temperaturbeiwert der Heizeinrichtung führt auf preiswerte Art und Weise zu einem sehr präzisen Ergebnis.

Weitere Vorteile der vorliegenden Erfindung liegt gemäß Anspruch 6 darin, daß die Heizeinrichtung temperaturgeregelt ist. Dadurch läßt sich die Wärmekopplung zwischen Heizeinrichtung und Schweißdraht optimieren..

Durch die manuelle Einstellung aller für eine Prozeßsteuerung notwendigen Parameter, wie z. B. Schweißstrom, Drahtvorwärmenergie, Drahtvorschub, Schweißvorschub, Gasmenge, Brennerposition, Pendelweg, Pendelgeschwindigkeit, etc., und Speicherung derselben gemäß Anspruch 7 ist gewährleistet, daß die Heizeinrichtung im laufenden Prozeß stets in optimaler Weise so geregelt wird, daß der Schweißdraht die gewünschte Arbeitstemperatur erreicht.

Gemäß Anspruch 8 ist es von Vorteil, wenn die Prozeßsteuerung, d. h., auch die Temperaturregelung der Heizeinrichtung, voll automatisch erfolgt.

Ferner ist es gemäß Anspruch 9 von Vorteil, daß das Durchgangsgehäuse im wesentlichen aus einem Keramikmaterial mit optimierter Wärmeleitfähigkeit besteht. Ein solches Keramikmaterial ist z. B. Al₂O₃, das in den für Heißdrahtverfahren relevanten Temperaturbereichen optimal wärmeleitend ist.

Ein weiterer Vorteil gemäß Anspruch 10 beruht darin, daß der Widerstandsdraht der Heizeinrichtung im wesentlichen aus Wolfram ist. Wolfram hat eine besonders hohe Temperaturbeständigkeit sowie einen sehr hohen Temperaturbeiwert und ist somit ein besonders gut geeigneter Werkstoff.

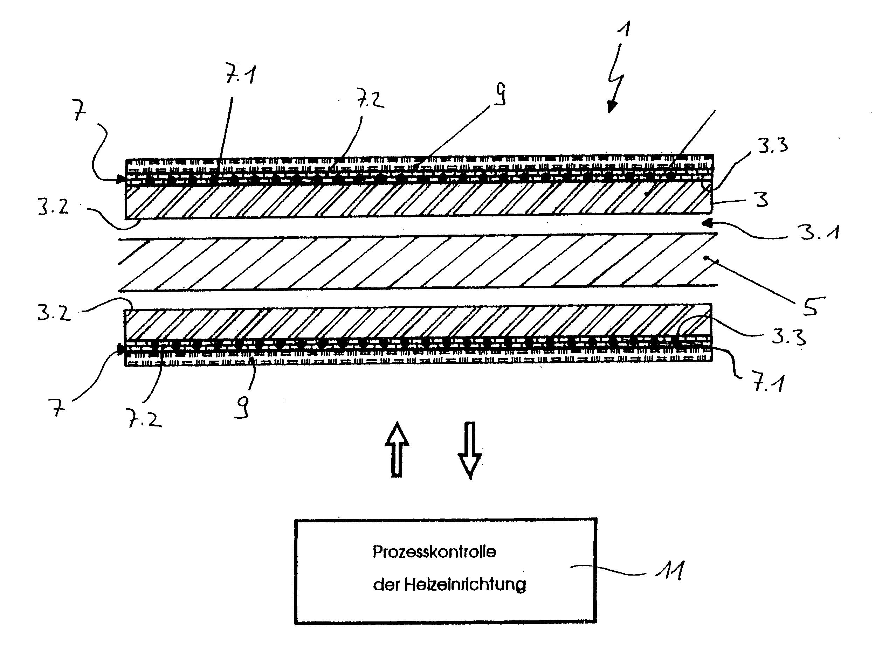

Eine Ausführungsform der vorliegenden Erfindung wird im folgenden anhand der Zeichnung näher beschrieben.

Die einzige Figur zeigt einen schematischen Längsschnitt durch eine Vorrichtung gemäß vorliegender Erfindung mit den schematischen Anschlüssen an eine Steuereinrichtung.

Eine Vorrichtung 1 zum thermischen Behandeln eines mittels Heißdrahtverfahren zu verarbeitenden Schweißdrahtes umfaßt ein Durchgangsgehäuse 3 mit einer Durchgangsöffnung 3.1, das in dieser Ausführungsform als hohlzylinderförmiges Rohr ausgebildet ist. Die Form des Rohres kann in anderen Ausführungsformen an die jeweiligen Einsatzbedingungen angepaßt sein und daher variieren. Der Innendurchmesser des rohrförmigen Durchgangsgehäuses 3 bzw. die Weite der Durchgangsöffnung 3.1 ist wenigsten gleich der Dicke eines Schweißdrahtes 5, so daß dieser wahlweise mit Berührung oder ohne Berührung einer Innenwandung 3.2 des Durchgangsgehäuses 3 durch die Durchgangsöffnung 3.1 hindurchgeführt werden kann. Zu diesem Zweck ist der Schweißdraht 5 jeweils stromabwärts und stromaufwärts der Vorrichtung 1 durch allgemein bekannte Anlagenelemente (nicht dargestellt) abgestützt und eingespannt.

Das Durchgangsgehäuse 3 besteht im wesentlichen aus einem Al₂O₃-Keramikmaterial, da dieses in einem für Heißdrahtverfahren relevanten (und allgemein bekannten) Temperaturbereich optimal wärmeleitend ist. In anderen Ausführungsformen kann auch ein anderes Material für das Durchgangsgehäuse 3 verwendet werden, z. B. wenn auch eine normale Wärmeleitung ausreicht und daher auf eine optimale Wärmeleitung verzichtet werden kann oder aber ein sich ähnlich optimal verhaltendes Material eingesetzt werden soll. Ein alternatives Material könnte z. B. auch eine Nickel-Kupfer-Legierung sein.

An der Außenwandung 3.3 des Durchgangsgehäuses 3 ist eine elektrische Heizeinrichtung 7 aufgebracht. Die Heizeinrichtung 7 umfaßt wenigstens einen Widerstandsdraht 7.1, der um die Außenwandung 3.3 gewickelt ist. Der Widerstandsdraht 7.1 ist in allgemein bekannter Weise an eine Leistungsversorgungsquelle (nicht dargestellt) angeschlossen. Die Steigung der Wicklung kann bedarfsweise in Abhängigkeit von der zu erbringenden Wärmekopplung mit dem Schweißdraht, d. h. der Heizleistung und den dafür zu berücksichtigenden Materialparametern, Schweißdraht 5, Widerstandsdraht 7.1, Material des Durchgangsgehäuses 3, etc., gewählt werden. In der vorliegenden Ausführungsform ist der Widerstandsdraht im wesentlichen aus Wolfram, da Wolfram eine hohe Temperaturbeständigkeit hat und einen hohen Temperaturbeiwert aufweist. Auch andere Werkstoffe mit ähnlichen Eigenschaften können eingesetzt werden.

Die:Heizeinrichtung 7 ist in einer wärmeleitenden Vergußmasse 7.2 eingebettet, die im wesentlichen nur der Fixierung des Widerstandsdrahtes 7.1 auf der Außenwandung 3.3 des Durchgangsgehäuses 3 dient.

Oberhalb der Heizeinrichtung 7 ist eine Wärmeisolierung 9 aus einer beliebigen, allgemein bekannten Materialschicht aufgebracht. In anderen Ausführungen kann es erforderlich sein außen über der Wärmeisolierung noch ein metallisches Schutzrohr (nicht dargestellt) vorzusehen.

Bei der eingangs erwähnten berührungslosen Führung des Schweißdrahtes 5 durch die Durchgangsöffnung 3.1 wird dieser im wesentlichen durch Strahlung erwärmt.

Die Vorrichtung 1 ist an eine Steuereinrichtung 11 angeschlossen (in der Figur durch Pfeile angedeutet), die den Gesamtprozeß des Heißdrahtverfahrens steuert und u. a. eine allgemein bekannte Speichereinrichtung (nicht dargestellt) umfaßt, in die alle notwendigen Stellgrößen und Betriebsparameter voreingegeben und gespeichert werden können, so daß während des Prozesses aufgrund einer Erfassung der Strom- und Spannungsstärke der Heizeinrichtung 7 bzw. des Widerstandsdrahtes 7.1 die Temperatur des Schweißdrahtes 5 in Abhängigkeit vom Temperaturbeiwert der Heizeinrichtung 7 bzw. des Widerstandsdrahtes 7.1 automatisch berechnet und so geregelt werden kann, daß der Schweißdraht 5 eine erwünschte Arbeitstemperatur erreicht und eine genaue Reproduzierbarkeit des Verfahrens anlagenseitig gewährleistet ist.

Darüber hinaus sind Eingabemittel (nicht dargestellt) vorgesehen, wie z. B. eine Schaltkonsole, über die ein Benutzer der Anlage die "Off-Line" erstellten Ablaufverfahren noch bedarfsweise "On-Line" optimieren kann.

Um jegliche magnetische Beeinflussung der Heizeinrichtung 7 auf den Schweißdraht 5 zu verhindern, sollte sich die Summe der Heizströme aufheben. Dies wird z. B. durch eine bifilare Wicklungsanordnung erreicht.

Eine andere Möglichkeit dies zu erreichen besteht darin, die Innenwandung 3.2 des Durchgangsgehäuses 3, durch das der Schweißdraht 5 hindurchläuft, elektrisch und magnetisch abzuschirmen.

Auch Verfahren, wie das MIG/MAG- Verfahren, die als Heißdrahtschweißung gelten, können von einer zusätzlichen Erwärmung profitieren, wenn weniger Energieeintrag in das Material gewünscht wird, und dabei die Schweißleistung erhöhen.

Ausdrücklich wird darauf hingewiesen, daß die erfindungsgemäße Heizeinrichtung 7 nicht notwendigerweise einen oder mehrere Widerstandsdrähte 7.1 aufweisen muß. Die Heizeinrichtung 7 kann in einer anderen Ausführungsform auch in einer anderen, aus dem Stand der Technik bekannten Weise ausgebildet sein. Auch dann gilt, daß die magnetische Beeinflussung des Schweißdrahtes 5 durch die Heizeinrichtung 7 unterbunden werden sollte. Dies kann entweder durch eine geeignete Maßnahme erfolgen, durch die sich die Summe der Heizströme aufhebt oder durch eine geeignete Abschirmung der Innenwandung 3.2 des Durchgangsgehäuses 3 erfolgen.

## Patentansprüche

1. Vorrichtung zum thermischen Vorbehandeln eines in einem Heißdrahtverfahren zu verarbeitenden Schweißdrahtes, der sich vor einem Arbeitsgang auf einer Temperatur unterhalb einer Arbeitstemperatur befindet,
**gekennzeichnet durch**
ein Durchgangsgehäuse (3) für den Schweißdraht (5), das eine elektrische Heizeinrichtung (7) aufweist, die den Schweißdraht (5) während des Durchgangs **durch** eine Durchgangsöffnung (3.1) von außen erwärmt.

2. Vorrichtung nach Anspruch 1,
**dadurch gekennzeichnet,**
**daß** das Durchgangsgehäuse (3) zwischen Heizeinrichtung (7) und Durchgangsöffnung (3.1) ein wärmeleitendes Trägermaterial aufweist.

3. Vorrichtung nach Anspruch 1 oder 2,
**dadurch gekennzeichnet,**
**daß** die Heizeinrichtung (7) wenigstens einen Widerstandsdraht (7.1) umfaßt, der außen um das Durchgangsgehäuse (3) gewickelt ist.

4. Vorrichtung nach einem der Ansprüche 1 bis 3,
**dadurch gekennzeichnet,**
**daß** über der Heizeinrichtung (7, 7.1) eine Wärmeisolierung (9) aufgebracht ist.

5. Vorrichtung nach einem der vorstehenden Ansprüche,
**gekennzeichnet durch,**
einer Steuereinrichtung (11) zur Erfassung der Strom- und Spannungsstärke in der Heizeinrichtung (7, 7.1) und zur Berechnung der Temperatur aus der Strom- und Spannungsstärke in Abhängigkeit vom Temperaturbeiwert der Heizeinrichtung (7, 7.1).

6. Vorrichtung nach einem der vorstehenden Ansprüche,
**dadurch gekennzeichnet,**
**daß** die Heizeinrichtung (7, 7.1) temperaturgeregelt ist.

7. Vorrichtung nach Anspruch 6,
**dadurch gekennzeichnet,**
**daß** alle für eine Prozeßsteuerung notwendigen Stellgrößen manuell eingestellt und in eine mit der Steuereinrichtung (11) verbunden Speichereinrichtung gespeichert sind.

8. Vorrichtung nach Anspruch 6 oder 7,
**dadurch gekennzeichnet,**
**daß** die Temperaturregelung einer Prozeßsteuerung unterliegt und abhängig ist von voreingestellten, konstanten Betriebsparameter einer Anlage für Heißdrahtverfahren.

9. Vorrichtung nach einem der vorstehenden Ansprüche,
**dadurch gekennzeichnet,**
**daß** das Durchgangsgehäuse (3) im wesentlichen aus Keramikmaterial mit optimierter Wärmeleitfähigkeit besteht.

10. Vorrichtung nach einem der vorstehenden Ansprüche,
**dadurch gekennzeichnet,**
**daß** die Heizeinrichtung (7) einen Widerstandsdraht (7.1) im wesentlichen aus Wolfram umfaßt.

11. Vorrichtung nach einem der vorstehenden Ansprüche,
**dadurch gekennzeichnet,**
**daß** sich die Heizströme der Heizeinrichtung (7, 7.1) neutralisieren, um magnetische und elektrische Beeinflussungen des Schweißdrahtes (5) zu vermeiden.

12. Vorrichtung nach Anspruch 11,
**dadurch gekennzeichnet,**
**daß** mindestens zwei Widerstandsdrähte (7.1) in bifilarer Wicklungsanordnung vorgesehen sind.

13. Vorrichtung nach einem der Ansprüche 1-10,
**dadurch gekennzeichnet**
**daß** die Innenwandung (3.2) des Durchgangsgehäuses (3) elektrisch und magnetisch abgeschirmt ist.

## Claims

1. A device for thermally pretreating a welding wire that is processed by means of a hot-wire method and has a temperature that lies below a working temperature before a working cycle, **characterized by** a housing (3), through which the welding wire (5) passes, wherein said housing contains an electric heating apparatus (7) that heats the welding wire (5) from the outside during its passage through a through-opening (3.1).

2. The device according to Claim 1, **characterized by** the fact that the housing (3) contains a thermally conductive carrier material between the heating apparatus (7) and the through-opening (3.1).

3. The device according to Claim 1 or 2, **characterized by** the fact that the heating apparatus (7) contains at least one resistance wire (7.1) that is wound around the outside of the housing (3).

4. The device according to one of Claims 1 - 3, **characterized by** the fact that heat insulation (9) is arranged above the heating apparatus (7, 7.1).

5. The device according to one of the preceding claims, **characterized by** a control device (11) for determining the current and voltage intensities in the heating apparatus (7, 7.1) and for calculating the temperature from the current and voltage intensities in dependence on the temperature coefficient of the heating apparatus (7, 7.1).

6. The device according to one of the preceding claims, **characterized by** the fact that the heating apparatus (7, 7.1) is temperature-controlled.

7. The device according to Claim 6, **characterized by** the fact that all correcting variables required for a process control are manually adjusted and stored in a storage system that is connected to the control device (11).

8. The device according to Claim 6 or 7, **characterized by** the fact that the temperature control this subject to a process control and dependent on preadjusted constant operating parameters of a system for carrying out hot-wire methods.

9. The device according to one of the preceding claims, **characterized by** the fact that the housing (3) essentially consists of a ceramic material with optimized thermal conductivity.

10. The device according to one of the preceding claims, **characterized by** the fact that the heating apparatus (7) contains a resistance wire (7.1) that essentially consists of tungsten.

11. The device according to one of the preceding claims, **characterized by** the fact that the heating currents of the heating apparatus (7, 7.1) neutralize one another so as to prevent the welding wire (5) from being magnetically and electrically influenced.

12. The device according to Claim 11, **characterized by** the fact that at least two resistance wires (7.1) are provided in a bifilar winding arrangement.

13. The device according to one of Claims 1 - 10, **characterized by** the fact that the inner wall (3.2) of the housing (3) is electrically and magnetically shielded.

## Revendications

1. Dispositif pour le prétraitement thermique d'un fil de soudage à traiter dans un procédé à fil chaud qui se trouve avant une opération à une température inférieure à une température de travail, **caractérisé par** un boîtier de passage (3) pour le fil de soudage (5), qui présente un appareil de chauffage (7) électrique, lequel réchauffe par l'extérieur le fil de soudage (5) pendant le passage par une ouverture de passage (3.1).

2. Dispositif selon la revendication 1, **caractérisé en ce que** le boîtier de passage (3) présente un matériau support électroconducteur entre l'appareil de chauffage (7) et l'ouverture de passage (3.1).

3. Dispositif selon la revendication 1 ou 2, **caractérisé en ce que** l'appareil de chauffage (7) comprend au moins un fil de résistance (7.1), qui est enroulé à l'extérieur autour du boîtier de passage (3).

4. Dispositif selon l'une quelconque des revendications 1 à 3, **caractérisé en ce qu'**une isolation thermique (9) est appliquée au-dessus de l'appareil de chauffage (7, 7.1).

5. Dispositif selon l'une quelconque des revendications précédentes, **caractérisé par** un dispositif de commande (11) pour l'enregistrement de l'intensité du courant et de l'intensité de tension dans l'appareil de chauffage (7, 7.1) et pour le calcul de la température à partir de l'intensité du courant et de l'intensité de tension en fonction du coefficient de température de l'appareil de chauffage (7, 7.1).

6. Dispositif selon l'une quelconque des revendications précédentes, **caractérisé en ce que** l'appareil de chauffage (7, 7.1) est régulé en température.

7. Dispositif selon la revendication 6, **caractérisé en ce que** toutes les grandeurs de commande nécessaire pour une commande de processus sont réglées manuellement et mémorisées dans un dispositif de mémorisation relié à l'appareil de commande (11).

8. Dispositif selon la revendication 6 ou 7, **caractérisé en ce que** le réglage de température est soumis à une commande de processus et est fonction de paramètres de service préréglés et constants d'une installation pour des procédés à fil chaud.

9. Dispositifs selon l'une quelconque des revendications précédentes, **caractérisé en ce que** le boîtier de passage (3) est essentiellement à base de matériau céramique avec une conductibilité thermique optimisée.

10. Dispositif selon l'une quelconque des revendications précédentes, **caractérisé en ce que** l'appareil de chauffage (7) comprend un fil de résistance (7.1) essentiellement à base de tungstène.

11. Dispositif selon l'une quelconque des revendications précédentes, **caractérisé en ce que** les courants de chauffage de l'appareil de chauffage (7, 7.1) se neutralisent pour éviter les influences magnétiques et électriques du fil de soudage (5).

12. Dispositif selon la revendication 11, **caractérisé en ce qu'**il est prévu au moins deux fils de résistance (7.1) dans un dispositif d'enroulement bifilaire.

13. Dispositif selon l'une quelconque des revendications 1 à 10, **caractérisé en ce que** la paroi interne (3.2) du boîtier de passage (3) est blindé au plan électrique et magnétique.
